# EUROPÄISCHE PATENTANMELDUNG

(11) **EP 3 070 050 A1**
(43) Veröffentlichungstag der Anmeldung: **21.09.2016**
(21) Anmeldenummer: 16160300.6
(22) Anmeldetag: 15.03.2016
(51) Int. Cl.: C01B 3/00, G21B 3/00, C01B 3/26

(54) **MATERIALANORDNUNG FÜR EINEN FUSIONSREAKTOR UND VERFAHREN ZUR HERSTELLUNG DERSELBEN**

(30) Priorität: 16.03.2015 DE 102015103843; 03.09.2015 DE 102015114749
(71) Anmelder: Airbus DS GmbH, 82024 Taufkirchen (DE)
(72) Erfinder: Kotzias, Bernhard, 28717 Bremen (DE)
(74) Vertreter: Marschall, Stefan

(57) **Zusammenfassung**

Offenbart ist eine Materialanordnung für einen Fusionsreaktor, aufweisend zumindest ein Material, das als ein schaumartiges Trägermaterial zum kondensierbaren Binden und Fusionieren von Wasserstoff ausgebildet ist, wobei das Trägermaterial mit positiv geladenen Fehlstellen zum Kondensieren von Wasserstoffatomen versehen ist, kleine Poren zum Aufnehmen des Kondensates und zur Beschleunigung der Kondensation nach vorherigem Eindringen von Atomen oder Molekülen in diese und große Poren zum Transport eines Katalysators in die kleinen Poren aufweist. Weiterhin ist ein Verfahren zur Herstellung der Materialanordnung offenbart.

## Beschreibung

Die Erfindung betrifft eine Materialanordnung für einen Fusionsreaktor gemäß dem Oberbegriff des Patentanspruchs 1, sowie ein Verfahren zur Herstellung der Materialanordnung nach dem Oberbegriff des Patentanspruchs 11.

In vielen Bereichen wird nach alternativen Energiequellen gesucht, welche insbesondere die Probleme der Energiequellen umgehen sollen, die auf nuklearen Reaktionen oder fossilen Brennstoffen basieren. Hierbei werden regelmäßig Fusionsprozesse genannt, die das Potential haben sollen, nachhaltig, umweltschonend und zuverlässig zu sein.

Neben der heißen Fusion sind bereits verschiedene Fusionsprozesse im Bereich der kalten Fusion beschrieben worden. Hierbei mangelt es diesen oftmals an nachweisbarer Funktionalität und Effektivität. Zunehmend lässt sich eine Entwicklung auf dem Gebiet der kalten Fusion hin zur Nutzung von kondensierter Materie erkennen.

So werden beispielsweise in der EP2680271A1 ein Verfahren und eine Vorrichtung zur Erzeugung von Energie durch Kernfusionen gezeigt. Dabei wird gasförmiger Wasserstoff katalytisch zum ultradichten Wassersoff kondensiert und auf einem Träger gesammelt. Der Träger wird anschließend in eine Strahlungskammer gebracht, in der der ultradichte Wasserstoff fusionieren kann. Schwierigkeiten ergeben sich hierbei insbesondere aus der Tatsache, dass der Träger unter konstanten Randbedingungen wie beispielsweise Vakuum transportiert werden muss, damit der Wasserstoff sich nicht aus seinem kondensierten Zustand verflüchtigen kann. Die technische Umsetzung des Verfahrens auf eine industriell nutzbare Vorrichtung kann somit sehr umständlich sein.

Zusätzlich zu der EP2680271A1 kann auch die EP1551032A1 genannt werden. Diese beschreibt ein Verfahren zur Erzeugung von Wärme basierend auf Wasserstoffkondensaten. Es kann insbesondere Wasserstoffgas an Nanopartikeln kondensiert werden. Hierfür muss das Wasserstoffgas mit hohem Druck beaufschlagt werden. Durch Ultraschallwellen können die kondensierten Wasserstoffatome miteinander fusionieren und somit Wärme erzeugen. Problematisch ist hierbei die Verwendung der Nanopartikel, da aufgrund deren Reaktivität die Auswirkungen auf die Umwelt bislang nur wenig geklärt sind.

Aus der WO2009/125444A1 sind weiterhin ein Verfahren und eine Vorrichtung zum Durchführen von exothermen Reaktionen zwischen Nickel und Wasserstoff bekannt. Es wird Wasserstoffgas unter Druck in ein mit Nickelpulver gefülltes Rohr eingebracht. Unter Einwirkung von Hitze kann das System zum Fusionieren gebracht werden. Als Problematisch stellt sich bei dieser Patentschrift insbesondere die Wiederverwendung bzw. Entsorgung von Nickel als giftiges Schwermetall dar.

Für technische Anwendungen unter mechanisch und thermisch belasteten Umgebungsbedingungen hat sich herausgestellt, dass metallische oder keramische Schäume gerade für das Material eines Fusionsreaktors erheblichen Anforderungen hinsichtlich der Temperaturbeständigkeit unterliegen. Möchte man eine Stabilität oberhalb einer Temperatur von 2000°C erreichen, so bleiben nur noch Materialien wie beispielsweise Zirkoniumoxid, Siliziumcarbid, Nitrid-keramik, Kohlenstoffstrukturen oder dergleichen übrig. Diese sind dabei entweder unter Sauerstoffatmosphäre nicht derart temperaturbeständig, oder sind sehr spröde und somit mechanisch instabil. Zirkonium-Oxidkeramik beispielsweise ist ebenfalls in seiner reinen Form wenig stabil und besonders in der Anwendung vom Zerfall betroffen. Darüber hinaus ist es auch nicht geeignet in einer mechanisch stark beanspruchten Umgebung mit vielen Vibrationen lange zu "überleben". Schon der Transport birgt erheblich Risiken hinsichtlich der mechanischen Stabilität des Materials.

Weiterhin muss ein kontrollierter Zustand vorliegen. Es darf keine Schmelze des Trägermaterials auftreten. Der Katalysator darf keine Änderung der Struktur erfahren und Hitzeeinwirkung aus der Fusion erfahren, oder muss in seine alte Struktur zurückfallen nach dem Schmelzvorgang. Damit kann ein Temperaturbereich für einen praktikablen Fusions-Prozess eingegrenzt werden.

Weiterhin stellt die Prozessführung einer Fusion ein Problem von Reaktionsverzögerungen dar. Läuft der Prozess zu langsam oder zu schwach ist dies ungünstig für den Wirkungsgrad. Eine gewisse Reaktionsfreudigkeit ist somit erforderlich, damit der Prozess schnell genug startet bei Bedarf an Energie.

Darüber hinaus können radioaktive Reaktionskanäle auftreten oder Neutronen auftreten. Diese sind zu minimieren, um eine praktikable Anwendung des Systems zu fahren. Schließlich soll die erzeugte Energie als Wärme enden, und weniger als Strahlung. Ein Modell der Reaktionskanäle ist deshalb unerlässlich.

Aufgabe der Erfindung ist es eine Materialanordnung für einen Fusionsreaktor zu schaffen, welche Wasserstoff zum ultradichten Wasserstoff kondensieren und speichern kann und unter Reaktionsbedingungen thermisch und mechanisch stabil bleibt oder in einen stabilen Zustand zurückkehrt. Weiterhin ist es Aufgabe der Erfindung ein zuverlässiges Verfahren zum Herstellen einer derartigen Materialanordnung zu schaffen.

Diese Aufgabe wird durch eine Materialanordnung für einen Fusionsreaktor mit den Merkmalen des Patentanspruchs 1 und durch ein Verfahren zur Herstellung der Materialvorrichtung mit den Merkmalen des Patentanspruchs 11 gelöst.

Eine Materialanordnung für einen Fusionsreaktor weist zumindest ein Material, das als ein schaumartiges Trägermaterial zum kondensierbaren Binden und Fusionieren von Wasserstoff ausgebildet ist auf. Erfindungsgemäß ist das Trägermaterial mit positiv geladenen Fehlstellen zum Kondensieren von Wasserstoffatomen versehen und weist kleine bzw. kleinere Poren zum Aufnehmen von Atomen oder Molekülen und große bzw. größere Poren zum Transport von Atomen oder Molekülen, darunter auch ein zum Transport eines zweiten Material, nämlich einen Katalysator, in die kleinen Poren auf. Die Materialanordnung kann hierbei aus mehreren unterschiedlichen Trägermaterialien bestehen.

Positive Ladungen üben eine Anziehungskraft auf die negativen Elektronen der Wasserstoff-Moleküle sowie der Gitterumgebung aus. Werden positiven Ladung in ein Trägermaterial eingeführt, besitzt das Trägermaterial oft eine Funktion für die Bildung von Ultradichten Wasserstoff. Die positiven Ladungen können beispielsweise positive Fehlstellen, oder lokale Ladungsverschiebungen durch Polarisation oder Influenz im Trägermaterial sein.

Das Trägermaterial weist neben kleinen Poren in der Größenordnung von 1-40µm große Poren auf. Die kleinen Poren und deren Oberfläche üben Casimir- und Kapillarkräfte aus und wirken sich positiv auf die Kondensation des Wasserstoffs aus und können diesen speichern. Die für die Bildung von Ultradichten Wasserstoffs genutzte spezifische Oberfläche der Schaumstruktur ergibt sich im Wesentlichen aus diesen Poren.

Die großen Poren sind zwischen 40µm und 100µm im Durchmesser und haben nur wenig Anteil an der Bildung von ultradichtem Wasserstoff. Diese Poren werden benutzt um eine Beschichtung mit Katalysator zu ermöglichen, dass zu den kleinen Poren Katalysatormaterial in Form einer Lösung oder Plasmas hin transportieren werden kann. Somit wird die spezifische Oberfläche in einem schaumartigen Trägermaterial weiter vergrößert, da das gesamte Trägermaterial-Volumen reaktionsfreudiger werden kann.

Vorzugsweise ist die Porengröße so gewählt, dass sie im Bereich der Wellenlänge der maximalen Planck'schen Strahlungsleistung im Temperaturbereich von über 200°C entspricht.

Hierbei kann die Materialanodnung ein gängiges Trägermaterial aufweisen, welches mechanisch und thermisch bis über 2000°C stabil ist und vorzugsweise nicht giftig ist und ebenso keine Nano-Strukturen aufweist, sodass die Herstellung durch die Beachtung von Arbeitsplatzsicherheitsrichtlinien für Nanotechnologie nicht erschwert wird.

Dies kann beispielsweise durch offenporige mikroporöse oxidische Meterialien realisiert werden. Das Trägermaterial kann beispielsweise durch Sintern hergestellt werden. Das Ausgangsmaterial für diesen Träger, oder auch Sinterstruktur, muss nicht zwangsweise von sich aus aktiv sein und somit ultradichten Wasserstoff kondensieren. Die Eigenschaft zur Bildung von ultradichten Wasserstoff kann beispielsweise durch die Hinzugabe von Katalysatormaterial eingebracht werden. Der Katalysator kann beispielsweise in die gesinterte Struktur des Trägermaterials positiv geladene Fehlstellen einbringen oder als Beschichtung auf das Trägermaterial appliziert werden. Somit kann gleichzeitig das Trägermaterial aktiviert und stabilisiert werden, wobei die Fähigkeit kondensierten Wasserstoff zu speichern gleichzeitig durch die Erzeugung weiterer Zwischen- oder Hohlräume erhöht wird.

Das aktive Trägermaterial bildet hier den ultradichten Wasserstoff in zwei Schritten. Zuerst wird molekularer Wasserstoff in seine Atome gepalten und anschließend in das Materialgitter des Trägermaterials eingebunden, wodurch die Wasserstoffatome zum ultradichten Wasserstoff kondensieren. Das Vorhandensein von positiven Fehlstellen und definierter Spin-Strömung führt dabei zur Bildung kollabierter Zuständen von Wasserstoff und wasserstoffähnlichen Systemen.

Ein Beispiel für ein oxidisches Trägermaterial ist Zirkonium-Dioxid, welches insbesondere in einer mikroporösen Form mechanisch stabilisiert werden muss. Die Stabilisierung von Zirkonium-Dioxid kann beispielsweise durch ein Einbringen von Erdalkalimetallen oder Yttrium oder anderen Atomen beziehungsweise Molekülen mit einem oder zwei freien Valenzelektronen erfolgen.

Gemäß einem Ausführungsbeispiel der Materialanordnung ist das Trägermaterial während einer Fusion zumindest bereichsweise schmelzbar und weist nach einem Schmelzvorgang und darauffolgenden Erstarren seine Ausgangsstruktur auf. Durch die hohen Temperaturen während einer Fusion kann nicht ausgeschlossen werden, dass das Trägermaterial zumindest bereichsweise schmilzt. Es ist von Vorteil, wenn das Trägermaterial eine "alpha"-Gitterstruktur (kubisch oder anders raumzentriert) aufweist. Das Trägermaterial soll dabei so gewählt sein, dass selbst unter Abgabe einer möglichst hohen Energie während einer Fusion das Material nicht seinen alpha Gitterzustand ändert, oder wenn dieser geändert wird durch beispielsweise schmelzen, dass wieder der alpha Gitterzustand erreicht wird nach dem Erstarren.

Bei einem weiteren Ausführungsbeispiel der Materialanordnung ist das Trägermaterial durch Dotierung mit positiv geladenen Fehlstellen versehen, welche gezielt Spinströme aus dem Dotierungsmaterial beinhalten. Hierdurch kann das Trägermaterial flexibel durch eine Vielzahl an Verfahren und mit verschiedenen Materialien mit positiv geladenen Fehlstellen dotiert werden.

Gemäß einem bevorzugten Ausführungsbeispiel der Materialanordnung ist ein weiteres Material vorgesehen, das als eine Katalysatorbeschichtung zur mechanischen und/oder chemischen Stabilisierung und/oder Beschleunigung aufgebracht ist. Die Katalysatorbeschichtung kann dabei mittels einer Transportflüssigkeit appliziert werden. Die großen Poren können hierbei benutzt werden, um den Katalysator in der Transportflüssigkeit auf die Oberfläche der kleinen Poren, welche an die großen Poren angrenzen, zu bringen. Die Beschichtung des Katalysators muss hierbei so erfolgen, dass die großen und die kleinen Poren nicht hierdurch verschlossen werden. Durch die Katalysatorbeschichtung wird die Materialanordnung spontaner und aktiver bei dem Prozess der Kondensierung von Wasserstoff zum ultradichten Wasserstoff. Die Speicherung des kondensierten ultradichten Wasserstoffs wird im Wesentlichen durch die kleinen Poren übernommen.

Beispielsweise kann Titan-Oxid allein oder mit zusätzlichen Materialien als Katalysator verwendet werden. Dieses Material kann auch supraleitenden Wasserstoff bei hohen Temperaturen bilden und macht damit die Materialanordnung reaktionsfreudiger für eine Fusion. Alternativ kann Nickel mit bis zu 20 Massen% Kupfer als Katalysator verwendet werden. Dieses Material kann ebenfalls viel fusionsfähigen Ultradichten Wasserstoff bilden. Alternativ können beide Katalysatoren gemischt werden, um den Übergang der Transitionstemperatur, bei der die Materialanordnung nicht mehr reaktionsfähig ist, zu mindern.

Der Katalysator kann je nach Material zwischen 600 und 725K bei einem Unterdruck von unter 0,1bar aktiv werden. Alternativ können auch mehrere Katalysatorbeschichtungen appliziert werden. Im bevorzugten Beispiel werden zwei Schichten appliziert.

Gemäß einem Ausführungsbeispiel der Materialanordnung hat die Katalysatorbeschichtung positiv geladene Fehlstellen. Der Katalysator kann beispielsweise Titan-Oxid, mit eingelagerten Elementen, wie Antimon, Nickel, Aluminium oder anderen Transitions- oder Halbmetallen, die eine positiv geladene Fehlstelle im Kornbereich des Elementes bilden, sein. Mit diesem Verfahren wird die Materialanordnung mechanisch stabiler und es wird aktiver bei der Bildung von ultradichtem Wasserstoff.

Bei einem weiteren Ausführungsbeispiel der Materialanordnung, ist das Trägermaterial durch Dotierung und zusätzlich durch eine Katalysatorbeschichtung mit positiv geladenen Fehlstellen versetzt. Durch diese Maßnahme wird die Fähigkeit der Materialanordnung, Wasserstoff zum ultradichten Wasserstoff zu kondensieren, verbessert.

Gemäß einem weiteren Ausführungsbeispiel der Materialanordnung ist die Katalysatorbeschichtung während einer Fusion zumindest bereichsweise schmelzbar und weist nach einem Schmelzvorgang ihre Ausgangsstruktur auf. Analog zum Trägermaterial kann auch die Katalysatorbeschichtung während einer Fusion bereichsweise schmelzen. Hierbei ist von Vorteil, wenn die Katalysatorbeschichtung im geschmolzenen Zustand keine Schäden am Trägermaterial anrichten kann und die Poren nicht verschließt. Weiterhin ist es vorteilhaft, wenn die Katalysatorbeschichtung beim Erstarren wieder in ihre ursprüngliche Struktur rekristallisiert und somit für weitere Fusionsprozesse zur Verfügung steht.

Bei einem weiteren Ausführungsbeispiel der Materialanordnung sind/ist das schaumartige Trägermaterial und/oder die Katalysatorbeschichtung fusionstemperaturfest. Werden die Materialien so gewählt, dass diese während einer Fusion nicht schmelzen, so können Schäden an der Materialanordnung während einer Fusion minimiert werden. Alternativ kann die Reaktionswärme während einer Fusion so schnell abgeführt werden, dass die Schmelzpunkte der bei der Materialanordnung verwendeten Materialien nicht erreicht werden.

Gemäß einem weiteren Ausführungsbeispiel ist das Trägermaterial ein Metalloxid, eine Keramik oder eine Kohlenstoffstruktur. Hieraus ergibt sich eine Vielzahl an Möglichkeiten zur Realisierung einer Materialanordnung.

Bei einem bevorzugten Ausführungsbeispiel der Materialanordnung ist eine supraleitende Flüssigkeit auf dem Trägermaterial bildbar, sodass eine Wahrscheinlichkeit einer elektromagnetischen Resonanz erhöht wird. Das Verhältnis von Q/V, d.h. die Güte der Resonanz einer elektromagnetischen Welle zum Volumen in dem diese schwingende Welle stattfindet ist ein wichtiger Parameter in der Quanten Elektrodynamik der Hohlräume. Je größer die Güte, desto kleiner die Dämpfung und desto ausgeprägter die Resonanzen oder anders ausgedrückt, desto kleiner der Energieverlust aus der Kavität bzw. dem Hohlkörper. Je kleiner das Volumen, desto höher die Energiedichte per Volumen und somit desto größer die erzeugte Energie.

Wird das Verhältnis Q/V hoch genug gewählt, so ergeben sich positive reversible thermodynamische Effekte. Die Hohlräume reflektieren mit zunehmender Güte immer effektiver die elektromagnetischen Wellen und reduzieren somit mögliche Verluste.

Bei einem Verfahren zur Herstellung einer Materialanordnung für einen Fusionsreaktor wird erfindungsgemäß ein Trägermaterial-Rohstoff bereitgestellt, der in ein schaumartiges Trägermaterial überführt wird. Erfindungsgemäß werden positiv geladene Fehlstellen in und/oder auf das schaumartige Trägermaterial eingebracht. Ein schaumartiges Trägermaterial weist eine große spezifische Oberfläche auf, die relevant für die Erzeugung und die Fusion von ultradichtem Wasserstoff ist. Durch das Einbringen weiterer Materialien in das Trägermaterial können positiv geladene Fehlstellen in diesem entstehen, wie beispielsweise durch Dotierung. Dies wirkt sich auf die Materialeigenschaften des Trägermaterials aus. Vorteilhafterweise wird die Zusammensetzung so gewählt, dass die Schmelztemperatur und die mechanische und chemische Stabilität des Trägermaterials erhöht sind.

Bei einem bevorzugten Ausführungsbeispiel des Verfahrens zur Herstellung einer Materialanordnung wird das schaumartige Trägermaterial mit dem Katalysator vermischt und zur Sinterung gebracht. Die chemische und mechanische Stabilität des Trägermaterials wird dadurch gesteigert. Durch darauffolgende Katalysatorbeschichtung wird insbesondere die Reaktionsfreudigkeit hinsichtlich der Bildung des ultradichten Wasserstoffs und Fusion erhöht.

Gemäß einem weiteren Ausführungsbeispiel des Verfahrens zur Herstellung einer Materialanordnung wird zum Einbringen positiv geladener Fehlstellen in das Trägermaterial und/oder in die Katalysatorbeschichtung Dotierung angewandt. Das Verfahren der Dotierung ist bereits aus dem Bereich der Halbleitertechnologie bekannt und bietet eine hohe Flexibilität bei der Herstellung der Materialanordnung.

Gemäß einem weiteren Ausführungsbeispiel des Verfahrens zur Herstellung einer Materialanordnung werden für die Dotierung des Trägermaterials Transitions- oder Halbmetalle verwendet. Diese bilden positiv geladene Fehlstellen im atomaren Bereich des Trägermaterials und verbessern die Fähigkeit der Materialanordnung Wasserstoffatome und -moleküle zum ultradichten Wasserstoff zu kondensieren.

Gemäß einem weiteren Ausführungsbeispiel des Verfahrens zur Herstellung einer Materialanordnung wird zum Einbringen positiv geladener Fehlstellen auf das Trägermaterial die Katalysatorbeschichtung verwendet. Hierbei kann die Dotierung des Trägermaterials entfallen, wodurch das Verfahren vereinfacht werden kann.

Sonstige vorteilhafte Ausführungsbeispiele sind Gegenstand weiterer Unteransprüche.

Im Folgenden wird anhand von stark vereinfachten schematischen Darstellungen ein bevorzugtes Ausführungsbeispiel der Erfindung näher erläutert. Es zeigen:
- Figur 1: einen Schnitt durch ein Ausführungsbeispiels der erfindungsgemäßen Vorrichtung,
- Figur 2: eine vergrößerte Ansicht des Abschnitts A aus Figur 1,
- Figur 3: eine vergrößerte Ansicht des Abschnitts B aus Figur 2,
- Figur 4: eine schematische Darstellung eines Aufladevorgangs gemäß dem erfindungsgemäßen Verfahren,
- Figur 5: eine schematische Darstellung eines Fusionsprozesses gemäß dem erfindungsgemäßen Verfahren,
- Figur 6: einen Schnitt durch ein Ausführungsbeispiel der erfindungsgemäßen Materialanordnung, und
- Figur 7: eine schematische Darstellung eines erfindungsgemäßen Verfahren zur Herstellung einer Materialanordnung.

In der Zeichnung weisen dieselben konstruktiven Elemente jeweils dieselbe Bezugsziffer auf.

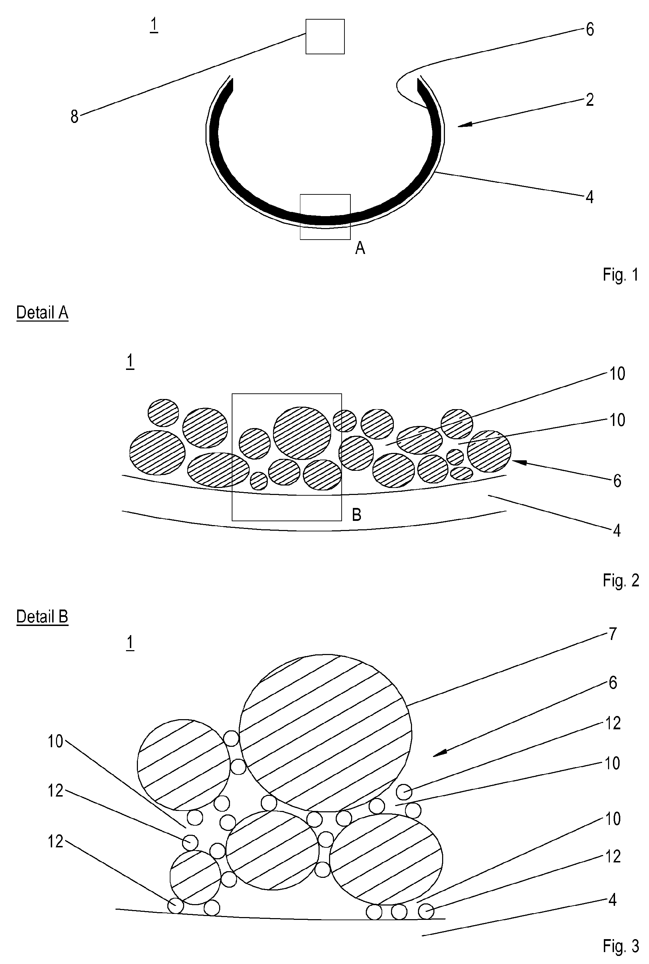

Die Figur 1 zeigt einen Schnitt durch ein Ausführungsbeispiel der erfindungsgemäßen Vorrichtung 1 zum Durchführen des erfindungsgemäßen Verfahrens zum Erzeugen und zum Fusionieren von ultradichtem Wasserstoff.

Die Vorrichtung 1 gemäß dem Ausführungsbeispiel besteht aus einem stellenweise offenen Hohlraum 2 zum Aufnehmen eines Gases. Das Gas ist hierbei vorzugsweise ein mit Unterdruck beaufschlagtes Wasserstoffgas in seiner molekularen Form, welches sofort im Hohlraum 2 zu einem atomaren Plasma umgewandelt wird.

Der Hohlraum 2 ist eine Pore eines ofenporigen Metallschaums oder Keramikschaums 4. Das Material des Metallschaums oder Kermaikschaums 4 soll dabei so gewählt sein, dass selbst unter Abgabe einer möglichst hohen Energie während einer Fusion das Material nicht seinen alpha Gitterzustand ändert, oder wenn dieser geändert wird, dass wieder der alpha Gitterzustand erreicht wird.

Die Pore des Metallschaums 4 ist gemäß dem Ausführungsbeispiel zumindest teilweise innenseitig mit einer Katalysatorbeschichtung 6 versehenen. Die Katalysatorbeschichtung 6 weist dabei eine körnige Struktur auf und beinhaltet gemäß dem Ausführungsbeispiel Titan Oxid. Die Katalysatorbeschichtung kann auch aus Fe2O3, Ni, MnO und andere Materialien, die als dünne gestört regelmäßige Gitterstruktur mit Schichtdicke von 10nm bis 4µm auf den Metallschaum oder den Keramikschaum aufgetragen werden können, aufgebaut sein.

Weiterhin weist die Vorrichtung 1 eine Initiierungsquelle 8 auf, die in einem Hohlraum 2 einen Fusionsprozess auslösen kann. Gemäß dem gezeigten Ausführungsbeispiel ist die Initiierungsquelle 8 eine Quelle von kohärenter, monochromatischen Lichtes 8, der den Hohlraum 2 mit elektromagnetischer Strahlung beaufschlagen kann. Die Initiierung erfolgt durch die Wärmestrahlung der Hohlraumwände, wobei durch Resonanzeffekte mit den nun durch den superflüssigen Wasserstoff verspiegelten Wände, bevorzugte Wellenlängen bzw. Frequenzen mit hoher Feldstärkeintensität auftreten. Das repulsive Potential zwischen Protonen ist sehr hoch. Die Protonen sind die Kerne des Wasserstoffs. Sie erfahren ihre Abstoßung durch ihre positive Ladung (Coulomb Abstoßung). Im Ultradichten Wasserstoff sind die Kerne sehr dicht gepackt und damit sich sehr nahe. Das abstoßende Potential der Kerne wird hier gemindert, durch die kugelförmige Ausdehnung der Ladungs- und Materiewolke des Protons. Weiterhin wird diese Abstoßung durch andere Kräfte, wie starke Wechselwirkung, schwache Wechselwirkung und Gravitiation, und durch die Abschirmung von elektronischen Zuständen, sehr stark gemindert. Wenn ultradichter Wasserstoff 12 geformt ist, ist die Dichte sehr hoch und die Fusionspartner, hier Wasserstoffatome 12, sind somit nahe der Fusionsbarriere. Bereits ein kleiner Energiebeitrag reicht demnach aus eine Fusion zu induzieren. Solch eine Zündung des Fusionsprozesses wird gemäß dem Ausführungsbeispiel entweder durch einen kohärente, monochromatische Lichtquelle 8 oder durch die natürliche Schwarzkörper-Strahlung des Hohlraums 2 ausgeführt, kann aber auch durch externe Ionisierung beispielsweise durch Hochspannung erfolgen. Alternativ kann auch eine simple Zündkerze als Initiierungsquelle 8 hierfür verwendet werden.

Die Figur 2 stellt eine vergrößerte Ansicht des Abschnitts A aus Figur 1 dar. Insbesondere wird hierbei die körnige Struktur der Katalysatorbeschichtung 6 verdeutlicht. Hierdurch wird eine Casimir-Geometrie geschaffen mit einer Vielzahl an Kavitäten 10, die Kapillar- und/oder Casimir-Kräfte auf Materie ausüben. Somit können auch entsprechende Kräfte auf einen in den Hohlraum 2 eingeleiteten molekularen Wasserstoff wirken. Weiterhin ist für solche Strukturen der "Purcell Effect" bekannt, welcher elektromagnetische Vorgänge um ein vielfaches verstärkt.

Eine weitere Vergrößerung der Struktur aus dem Ausführungsbeispiels der erfindungsgemäßen Vorrichtung 1 des Ausschnitts B aus Figur 2 zeigt die Figur 3. Hierbei wird verdeutlicht, dass die körnige Struktur der Katalysatorbeschichtung 6 molekularen Wasserstoff in atomaren Wasserstoff spaltet und dieser anschließend in ultradichten Wasserstoff 12 kondensiert in den Kavitäten 10 bzw. den Casimir Geometrien 10. Dies entspricht einem aufgeladenen Zustand der Vorrichtung 1.

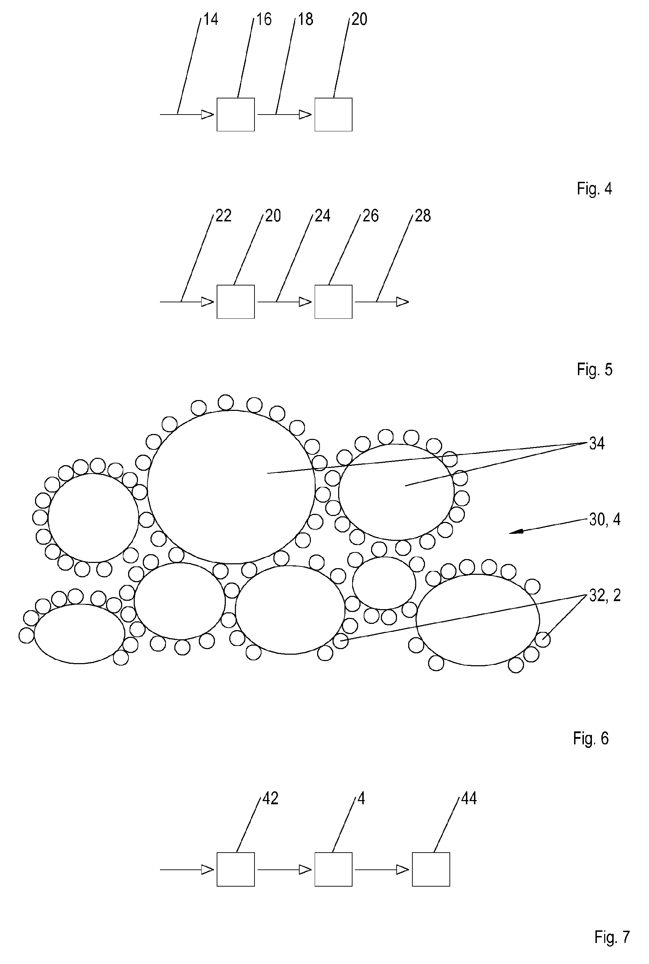

Im Folgenden wird das erfindungsgemäße Verfahren zum Erzeugen und zum Fusionieren von ultradichtem Wasserstoff erläutert. Die Figur 4 zeigt eine schematische Darstellung eines Aufladevorgangs der Vorrichtung 1 gemäß dem erfindungsgemäßen Verfahren. Dabei wird in den Hohlraum 2 ein Gas hineingeleitet (Bezugsziffer 14), welches katalysiert und kondensiert werden soll. Das Gas ist gemäß dem Ausführungsbeispiel molekularer Wasserstoff. Durch den Kontakt des Wasserstoffgases mit der Katalysatorbeschichtung 6 wird die benötigte Energie für eine Plasmabildung und auch für eine Kondensat-Bildung soweit herabgesetzt (Bezugsziffer 16), dass diese unter Raumtemperatur und noch tieferen Temperaturen spontan erfolgen kann. Das Kondensat ist gemäß dem Ausführungsbeispiel atomarer Wasserstoff, der katalytisch gespalten wurde. Anschließend kondensiert (Bezugsziffer 20) der atomare Wasserstoff in der Casimir Geometrie und lagert sich in der Katalysatorbeschichtung 6 ein und liegt somit in kondensierter Form als ultradichter Wasserstoff 12 vor.

In Figur 5 ist ein möglicher Fusionsprozess gemäß dem erfindungsgemäßen Verfahren dargestellt. Es wird von einer beispielsweise gemäß Figur 4 aufgeladenen Vorrichtung 1 ausgegangen. Durch eine Initiierungsquelle 8 wird der eingelagerte (Bezugsziffer 20) kondensierte ultradichte Wasserstoff 12 energetisch angeregt. Der kondensierte Wasserstoff bildet Cluster 12. Diese liegen stark gestaucht beieinander und zwischen den schweren Katalysatorpartikeln 7. Die Protonen des Wasserstoffs sind sehr dicht gepackt - wobei die Packungsdichte sich aus dem quantenmechanischen Zustand der bindenden Elektronen im Zusammenwirken mit den Protonen ergibt. Das Nahfeld der Katalysatorpartikel 7 unterstützt die Kondensation. Die Packungsdichte der Protonen liegt innerhalb der kritischen Dichte für die Penetration der Fusionsbarriere. Der Energiebeitrag 22 aus der Initiierungsquelle 8 induziert somit einen Fusionsprozess 24 des ultradichten Wasserstoffs. Durch den Fusionsprozess 24 entsteht insbesondere Helium, welches sich aus der Katalysatorbeschichtung 6 verflüchtigen kann. Neben dem Helium entsteht Reaktionsenergie 26 in Form von Wärme. Diese Reaktionsenergie 26 wird anschließend über den Metallschaum/Keramikschaum 4 mittels Wärmeleitung und an deren Oberfläche mittels Wärmestrahlung aus der Vorrichtung 1 hinausgeleitet (Bezugsziffer 28) oder in benachbarte Bereiche der Vorrichtung weitergeleitet. Die Reaktionsenergie 26 kann somit beispielsweise zur Zündung von Fusionen in benachbarten Vorrichtungen genutzt werden. Weiterhin kann die Reaktionsenergie, insbesondere Reaktionswärme, auch konventionell in mechanische, chemische oder elektrische Energie gewandelt und genutzt werden.

Die Figur 6 zeigt einen Schnitt durch ein Ausführungsbeispiel der erfindungsgemäßen Materialanordnung 30, bei der es sich um einen Metallschaum 4 mit einer Katalysatorbeschichtung 6 (nicht sichtbar in Fig. 6) handelt. Der in Figur 1 gezeigte Hohlraum 2 entspricht hierbei einer kleinen Pore 32 der Materialanordnung 30.

Die Materialanordnung 30 weist darüber hinaus große Poren 34 auf, die die kleinen Poren 32 anbinden für beispielsweise den Transport von Wasserstoffmolekülen. Die großen Poren 34 dienen ebenfalls der Applikation und dem Transport der Katalysatorbeschichtung 6, sodass auch die kleinen Poren 32 beschichtet sind.

Die Figur 7 zeigt eine schematische Darstellung eines erfindungsgemäßen Verfahrens 40 zur Herstellung einer Materialanordnung 30. Dabei wird im ersten Schritt ein Trägermaterial-Rohstoff 42 bereitgestellt. Der Trägermaterial-Rohstoff 42 ist hierbei ein Pulver und wird anschließend durch beispielsweise Sintern bei 1500 Grad C in ein schaumartiges Trägermaterial 4 überführt und optional vorab sowie zusätzlich anschließend durch Einbringen positiv geladener Fehlstellen 44 reaktiv für die Kondensation und Speicherung von Wasserstoff gemacht. Das Einbringen von positiv geladenen Fehlstellen erfolgt gemäß dem Ausführungsbeispiel durch das Einbringen von Fremdkristallen in das Ausgangsmaterial zur Herstellung des Trägermaterials oder im Nachhinein durch die Beschichtung mit einem Oxid, welches durch Beimischung von Fremdatomen positiv geladene Fehlstellen ausbildet.

Positive geladene Fehlstellen sind hier als Synonym für elektronische Systeme erwähnt, welche eine Spinströmung aufweisen (z.B. zwei freie gleichgerichtete elektronische Spinzustände mit einem ganzzahligen Spin, welcher einen bosnischen Zustand charakterisiert.

Als ein mögliches Beispiel für die Herstellung der Materialanordnung 30 wird ZrO2 mit 13 mol% Yttrium und einer Katalysatorlösung aus 10 Gewichts% Katalysator in Heptan vermengt. Dabei werden 60-70 volumen% 150µm große Kohlenstoffpartikel beigemengt. Dieses Gemisch wird unter Rühren auf 200°C erhitzt bis sich das Heptan verflüchtigt hat. Es bleib eine Masse zurück, der abgekühlt in eine Form bei mindestens 5kN Druck gepresst werden kann. Dabei ist die Porengröße der Materialanordnung 30 abhängig von dem hier aufgebrachten Druck. Je höher der Druck, desto kleiner werden die Poren 32, 34 sein. Kleiner Druck kann hierbei jedoch die mechanische Stabilität beeinträchtigen. Die gepresste Form wird anschließend mit Wärme beaufschlagt und unter Zugabe von Sauerstoff gesintert. Hierdurch reagieren die Kohlenstoffpartikel mit Sauerstoff zu Kohlenstoffdioxid und verflüchtigen sich aus der Form, sodass eine mikroporöse Struktur überbleibt.

Anschließend kann nach dem Abkühlen eine weitere Katalysatorbeschichtung 6 appliziert werden. Dies geschieht beispielsweise durch Lösen von 25g eines Katalysators in 6ml Methanol und darauf folgendem Tränken der Struktur mit der Lösung. Ein Trocknungsvorgang kann hierbei vorteilhaft sein bei 200°C für über 6 Stunden, sodass sich das Methanol verflüchtigen kann.

Offenbart ist eine Materialanordnung 30 für einen Fusionsreaktor, aufweisend zumindest ein Material, das als ein schaumartiges Trägermaterial 4 zum kondensierbaren Binden und Fusionieren von Wasserstoff ausgebildet ist, wobei das Trägermaterial 4 mit positiv geladenen Fehlstellen zum Kondensieren von Wasserstoffatomen versehen ist, kleine Poren 32 zum Aufnehmen von Atomen oder Molekülen und große Poren 34 zum Transport von Atomen oder Molekülen in die kleinen Poren 32 aufweist. Weiterhin ist ein Verfahren 40 zur Herstellung der Materialanordnung 30 offenbart.

### Bezugszeichenliste

- 1: Vorrichtung
- 2: Hohlraum
- 4: Metallschaum
- 6: Katalysatorbeschichtung
- 7: Katalysatorpartikel der Katalysatorbeschichtung
- 8: Initiierungsquelle / Laser
- 10: Kavität / Casimir Geometrie
- 12: eingelagerte ultradichte Wasserstoff

- 14: Einleitung eines Fluids
- 16: Katalyse
- 18: Kondensation
- 20: Einlagerung

- 22: Initiierungsenergie
- 24: Fusionsprozess
- 26: Reaktionsenergie
- 28: Hinausleiten der Reaktionsenergie

- 30: Materialanordnung
- 32: kleine Pore
- 34: große Pore

- 40: Verfahren zur Herstellung einer Materialanordnung
- 42: Bereitstellen eines Trägermaterial-Rohstoffs
- 44: Einbringen positiv geladener Fehlstellen

## Patentansprüche

1. Materialanordnung (30) für einen Fusionsreaktor, aufweisend zumindest ein Material, das als ein schaumartiges Trägermaterial (4) zum kondensierbaren Binden und Fusionieren von Wasserstoff ausgebildet ist, **dadurch gekennzeichnet, dass** das Trägermaterial(4) mit positiv geladenen Fehlstellen zum Kondensieren von Wasserstoffatomen versehen ist, kleine Poren (32) zum Aufnehmen von Atomen oder Molekülen und große Poren (34) zum Transport von Atomen oder Molekülen in die kleinen Poren (32) aufweist.

2. Materialanordnung (30) nach Anspruch 1, wobei das Trägermaterial (4) während einer Fusion (24) zumindest bereichsweise schmelzbar ist und nach einem Schmelzvorgang seine Ausgangsstruktur aufweist.

3. Materialanordnung (30) nach Anspruch 1 oder 2, wobei das Trägermaterial (4) durch Dotierung mit positiv geladenen Fehlstellen versehen ist.

4. Materialanordnung (30) nach einem der Ansprüche 1 bis 2, wobei ein weiteres Material vorgesehen ist, das als eine Katalysatorbeschichtung (6) zur mechanischen und/oder chemischen Stabilisierung und/oder Beschleunigung aufgebracht ist.

5. Materialanordnung (30) nach Anspruch 4, wobei die Katalysatorbeschichtung (6) positiv geladene Fehlstellen hat.

6. Materialanordnung nach einem der Ansprüche 1 bis 2, wobei das Trägermaterial durch Dotierung und durch eine Katalysatorbeschichtung (6) mit positiv geladenen Fehlstellen versetzt ist.

7. Materialanordnung (30) nach einem der Ansprüche 4 bis 6, wobei die Katalysatorbeschichtung (6) während einer Fusion (24) zumindest bereichsweise schmelzbar ist und nach einem Schmelzvorgang ihre Ausgangsstruktur aufweist.

8. Materialanordnung (30) nach einem der Ansprüche 1 bis 7, wobei das schaumartige Trägermaterial (4) und/oder die Katalysatorbeschichtung (6) fusionstemperaturfest sind/ist.

9. Materialanordnung (30) nach einem der Ansprüche 1 bis 8, wobei das Trägermaterial (4) ein Metalloxid, ein Übergangsmetall, eine Keramik oder eine Kohlenstoffstruktur ist.

10. Materialanordnung (30) nach einem der Ansprüche 1 bis 9, wobei eine supraleitende Flüssigkeit auf dem Trägermaterial (4) bildbar ist und eine Wahrscheinlichkeit einer elektromagnetischen Resonanz erhöht.

11. Verfahren (40) zur Herstellung einer Materialanordnung (30) für einen Fusionsreaktor nach einem der Ansprüche 1 bis 10, **gekennzeichnet durch**
- Bereitstellen eines Trägermaterial-Rohstoffs (42),
- Überführen des Trägermaterial-Rohstoffs (42) in einen schaumartiges Trägermaterial (4),
- Einbringen positive geladener Fehlstellen (44) in und/oder auf das schaumartige Trägermaterial (4).

12. Verfahren (40) zur Herstellung einer Materialanordnung (30) nach Anspruch 11, wobei das schaumartige Trägermaterial (4) mit einer Katalysatorbeschichtung (6) stabilisiert wird.

13. Verfahren (40) zur Herstellung einer Materialanordnung (30) nach Anspruch 11 und 12, wobei zum Einbringen positiv geladener Fehlstellen (44) in das Trägermaterial (4) und/oder in die Katalysatorbeschichtung (6) Dotierung angewandt wird.

14. Verfahren (40) zur Herstellung einer Materialanordnung (30) nach einem der Ansprüche 11 bis 13, wobei für die Dotierung des Trägermaterials (4) Transitions- oder Halbmetalle verwendet werden.

15. Verfahren (40) zur Herstellung einer Materialanordnung (30) nach einem der Ansprüche 11 bis 14, wobei zum Einbringen positiv geladener Fehlstellen (44) auf das Trägermaterial (4) die Katalysatorbeschichtung (6) verwendet wird.
